# NEUE EUROPÄISCHE PATENTSCHRIFT

(11) **EP 2 347 163 B2**
(45) Veröffentlichungstag und Bekanntmachung des Hinweises auf die Entscheidung über den Einspruch: **24.02.2021**
(45) Hinweis auf die Patenterteilung: 20.03.2013
(21) Anmeldenummer: 09751906.0
(22) Anmeldetag: 12.11.2009
(51) Int. Cl.: B29C 65/16, B29C 65/00, F16L 53/00

(54) **LEITUNGSVERBINDER FÜR MEDIENLEITUNGEN**
LINE CONNECTOR FOR MEDIA LINES
RACCORD DE CONDUITE POUR CONDUITES DE FLUIDES

(30) Priorität: 18.11.2008 DE 202008015289 U; 18.09.2009 DE 102009042210
(43) Veröffentlichungstag der Anmeldung: 27.07.2011
(73) Patentinhaber: Voss Automotive GmbH, 51688 Wipperfürth (DE)
(72) Erfinder: ROSENFELDT, Sascha, 44137 Dortmund (DE); VEDDER, Martin, 58566 Kierspe (DE)
(74) Vertreter: Patent- und Rechtsanwälte Dr. Solf & Zapf
(86) Internationale Anmeldenummer: PCT/EP2009/065027
(87) Internationale Veröffentlichungsnummer: WO 2010/057819

(56) Entgegenhaltungen:
- EP-A- 1 985 908
- EP-A1- 1 557 601
- EP-A2- 0 219 126
- EP-B1- 1 375 997
- WO-A-2008/151924
- WO-A-2009/080477
- WO-A2-2009/013342
- DE-A1- 3 017 809
- DE-A1- 3 544 589
- DE-A1- 10 130 362
- DE-A1-102008 006 323
- DE-U1-202004 016 102
- DE-U1-202007 009 588
- FR-A1- 2 605 273
- JP-A- 9 042 573
- JP-A- 10 204 943
- JP-A- 2002 071 067
- JP-A- 2004 114 456
- JP-A- 2005 305 985

## Beschreibung

Die vorliegende Erfindung betrifft einen Leitungsverbinder für Medienleitungen, bestehend aus einem Verbinderstück mit einem Strömungskanal und mit mindestens einem Anschlussabschnitt zur Anschlussverbindung mit einer Medienleitung oder mit einem Aggregat und mit mindestens einem an den Anschlussabschnitt angrenzenden Übergangsabschnitt, gemäß dem Oberbegriff des Anspruchs 1.

Ein Leitungsverbinder gemäß dem Oberbegriff des Anspruchs 1 ist aus der EP 1 985 908 A1 bekannt.

Leitungsverbinder der genannten Art dienen zum gegenseitigen Verbinden von mindestens zwei Medienleitungen oder zur Anschlussverbindung mindestens einer Leitung an einem beliebigen Aggregat, und zwar insbesondere in einem Kraftfahrzeug. Dabei werden häufig solche Medien über die Leitungen geführt, die auf Grund eines relativ hohen Gefrierpunktes bereits bei relativ hohen, je nach Witterung durchaus möglichen Umgebungstemperaturen zum Gefrieren neigen. Dadurch können bestimmte Funktionen beeinträchtigt werden. Dies ist beispielsweise bei Wasserleitungen für die Scheibenwaschanlage der Fall sowie auch bei Leitungen für eine Harnstofflösung, die als NOₓ-Reduktionsadditiv für Dieselmotoren mit so genannten SCR-Katalysatoren eingesetzt wird. So liegt der Gefrierpunkt eines SCR-Mediums bei etwa -11 °C.

Bei der Medienleitung kann es sich insbesondere um eine Rohr- oder Schlauchleitung für pneumatische oder hydraulische Medien handeln, die an ein - im Grunde beliebiges - Aufnahmeteil, wie z. B. ein Aggregateteil oder ein weiteres Leitungsanschlussteil angeschlossen werden soll, dessen Anschlussöffnung vorzugsweise zylindrisch oder konisch ausgebildet ist. Solche Medienleitungen sind oft aus Kunststoff hergestellt und werden miteinander bzw. mit einem schaftförmig ausgebildeten Anschlussabschnitt des Leitungsverbinders verbunden, beispielsweise mittels Laser verschweißt, aufgedornt oder auf andere geeignete Weise aneinander angeschlossen.

Der vorliegenden Erfindung liegt die Aufgabe zu Grunde, einen Leitungsverbinder der genannten Art zu schaffen, der speziell für den genannten bevorzugten Anwendungsfall geeignet ist und ein Gefrieren des jeweiligen Mediums im Verbinderbereich verhindert bzw. - insbesondere ausgehend von einer Anfangstemperatur von bis zu -30 °C - ein Auftauen in einer vorgegebenen Zeit ermöglicht.

Erfindungsgemäß wird dies durch einen Leitungsverbinder gemäß Anspruch 1 erreicht.

Im Bereich des mindestens einen Anschlussabschnittes und/oder des Übergangsabschnittes, d. h. außerhalb des Anschlussabschnittes oder der Anschlussabschnitte, sind elektrische Heizmittel in einer den Strömungskanal über seinen Umfang zumindest teilweise, bevorzugt aber vollständig über 360°, umschließenden Anordnung vorgesehen. Diese Heizmittel können ein Einfrieren des jeweiligen Mediums innerhalb des Verbinderstückes vermeiden oder aufheben, indem ein bei stehendem Fahrzeug, z. B. über Nacht, eingefrorenes Medium aufgetaut wird. Dabei sind die Heizmittel derart konzipiert, dass eine definierte Beheizung bei guter elektrischer Isolation, gutem Wärmeübergang, guten mechanischen Eigenschaften und Schutz vor mechanischen Beschädigungen und Korrosion gewährleistet ist.

Dadurch, dass erfindungsgemäß am Verbinderstück ein Fixierteil mit Elementen zur Führung und Fixierung der Heizmittel angeordnet werden kann, ist es möglich, bedarfsweise einen unbeheizten bzw. bisher nicht beheizbaren Leitungsverbinder durch Bestückung mit dem zusätzlichen Teil in montagetechnisch einfacher Weise für eine Beheizung auszurüsten. Somit ist für unbeheizbare und beheizbare Leitungsverbinder nur eine Art von Verbinderstück nötig, was zu einer Reduzierung der Werkzeugkosten führt.

Hierbei ist es erfindungsgemäß vorgesehen, das Fixierteil konstruktiv so zu gestalten, beispielsweise als Wendel auszubilden, dass es auf das Verbinderstück aufgeschoben oder aufgeclipst werden kann.

Ein Aufschieben des Fixierteils auf den Übergangsabschnitt und/oder insbesondere auf einen Anschlussabschnitt, an den eine Medienleitung angeschlossen bzw. in den speziell ein Rohrstück eingeschweißt werden soll, kann dabei vor einem Verschweißen des Rohrstückes erfolgen. Ein Aufclipsen kann entweder vor oder auch nach einem Einschweißen eines Rohrstücks in den Anschlussabschnitt vorgenommen werden.

In besonders bevorzugter Ausführung der Erfindung kann als Variante ein Fixierteil vorgesehen sein, welches auch den Schweißbereich überdeckt. Dadurch gibt es keinen Bereich, in dem das Medium nicht oder nur unzureichend aufgetaut würde. Es ist somit mit Vorteil möglich, eine durchgehende, lückenlose Beheizung einer mit dem erfindungsgemäßen Rohrverbinder konfektionierten Leitung über die gesamte Länge vorzunehmen, so dass ein Schutz gegen Einfrieren über den gesamten Transportweg des Mediums gewährleistet ist.

Weitere vorteilhafte Ausgestaltungsmerkmale der Erfindung sind in den Unteransprüchen sowie der folgenden Beschreibung enthalten.

Anhand von mehreren bevorzugten Ausführungsbeispielen soll im Folgenden die Erfindung näher erläutert werden. Dabei zeigen:
- Fig. 1: eine perspektivische Explosionszeichnung eines erfindungsgemäßen Leitungsverbinders, wobei ein Verbinderstück und ein Fixierteil in einer ersten Ausführung dargestellt sind,
- Fig. 2: die in Fig. 1 gezeigten Einzelteile im Zusammenbau,
- Fig. 3a, 3b und 3c: in perspektivischer Darstellung, in Stirnansicht und in Vorderansicht, eine zweite Ausführung eines Fixierteils eines erfindungsgemäßen Leitungsverbinders,
- Fig. 4a, 4b und 4c: in perspektivischer Darstellung, in Stirnansicht und in Vorderansicht, eine dritte Ausführung eines Fixierteils eines erfindungsgemäßen Leitungsverbinders,
- Fig. 5a, 5b und 5c: in perspektivischer Darstellung, in Stirnansicht und in Vorderansicht, eine vierte Ausführung eines Fixierteils eines erfindungsgemäßen Leitungsverbinders,
- Fig. 6a, 6b und 6c: in perspektivischer Darstellung, in Stirnansicht und in Vorderansicht, eine fünfte Ausführung eines Fixierteils eines erfindungsgemäßen Leitungsverbinders,
- Fig. 7a, 7b und 7c: in perspektivischer Darstellung, in Stirnansicht und in Vorderansicht, eine sechste Ausführung eines Fixierteils eines erfindungsgemäßen Leitungsverbinders,
- Fig. 8: einen Längsschnitt durch eine siebente Ausführung eines erfindungsgemäßen Leitungsverbinders,
- Fig. 9: in einer Ansicht wie in Fig. 2, eine achte Ausführung eines erfindungsgemäßen Leitungsverbinders,
- Fig. 10: eine perspektivische Einzeldarstellung des in Fig. 9 gezeigten Fixierteils,
- Fig. 11: in einer Ansicht wie in Fig. 2 und 9, eine neunte Ausführung eines erfindungsgemäßen Leitungsverbinders.
- Fig. 12a bis 12d: in vier verschiedenen Ansichten, ein Fixierteil einer zehnten Ausführung eines erfindungsgemäßen Leitungsverbinders,
- Fig. 12e und 12f: in zwei verschiedenen Ansichten die zehnte Ausführung des erfindungsgemäßen Leitungsverbinders,
- Fig. 13a bis 13d: in vier verschiedenen Ansichten, ein Fixierteil einer elften Ausführung eines erfindungsgemäßen Leitungsverbinders,
- Fig. 13e und 13f: in zwei verschiedenen Ansichten, den gesamten erfindungsgemäßen Leitungsverbinders in der elften Ausführung,
- Fig. 14a, 14b und 14c: in perspektivischer Darstellung, in Stirnansicht und in Vorderansicht, eine zwölfte Ausführung eines Fixierteils eines erfindungsgemäßen Leitungsverbinders,
- Fig. 15a, 15b und 15c: in perspektivischer Darstellung, in Stirnansicht und in Vorderansicht, eine dreizehnte Ausführung eines Fixierteils eines erfindungsgemäßen Leitungsverbinders,
- Fig. 16a bis 16d: in vier verschiedenen Ansichten, ein Fixierteil einer vierzehnten Ausführung eines Leitungsverbinders, die nicht zur Erfindung gehört,
- Fig. 16e und 16f: in zwei verschiedenen Ansichten, die vierzehnte Ausführung des Leitungsverbinders als Ganzes,
- Fig. 17a, 17b und 17c: in perspektivischer Darstellung, in Stirnansicht und in Vorderansicht, eine fünfzehnte Ausführung eines Fixierteils eines Leitungsverbinders, die nicht zur Erfindung gehört^,
- Fig. 18a, 18b und 18c: in perspektivischer Darstellung, in Stirnansicht und in Vorderansicht, eine sechzehnte Ausführung eines Fixierteils eines Leitungsverbinders, die nicht zur Erfindung gehört,
- Fig. 19a, 19b und 19c: in perspektivischer Darstellung, in Stirnansicht und in Vorderansicht, eine siebzehnte Ausführung eines Fixierteils eines Leitungsverbinders, die nicht zur Erfindung gehört,
- Fig. 20a, 20b und 20c: in perspektivischer Darstellung, in Stirnansicht und in Vorderansicht, eine achtzehnte Ausführung eines Fixierteils eines erfindungsgemäßen Leitungsverbinders.

In den verschiedenen Figuren der Zeichnung sind gleiche Teile stets mit den gleichen Bezugszeichen versehen. Jede eventuell nur einmal unter Bezugnahme auf nur eine oder einen Teil der Zeichnungsfiguren vorkommende Beschreibung eines Teils gilt daher analog auch bezüglich der anderen Zeichnungsfiguren, in denen dieses Teil mit dem entsprechenden Bezugszeichen ebenfalls zu erkennen ist.

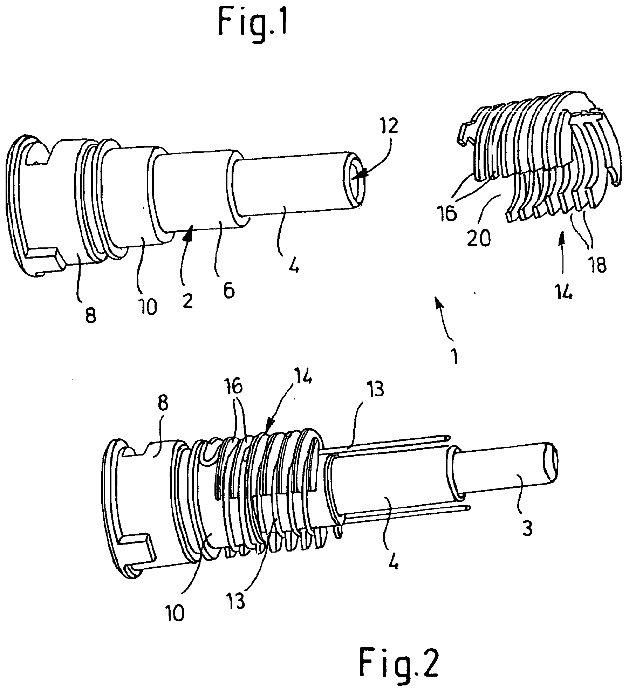

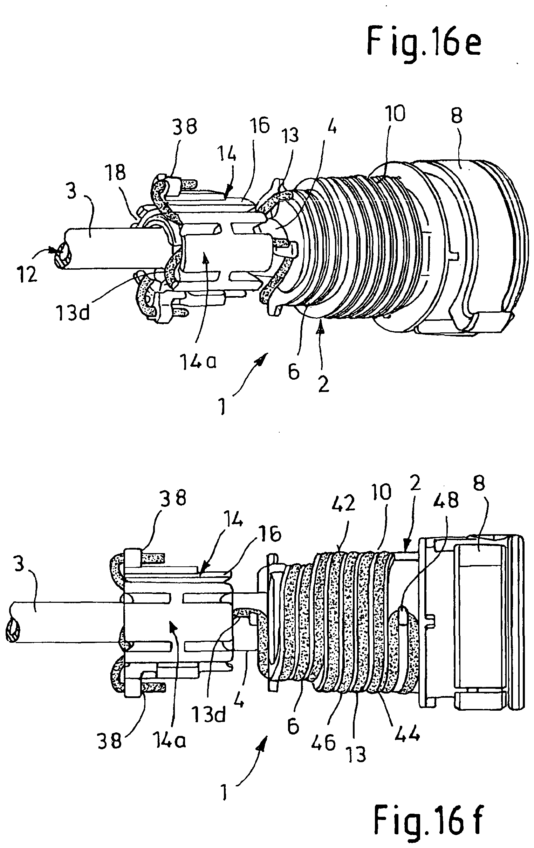

Wie zunächst Fig. 1 und 2 zeigen, besteht ein erfindungsgemäßer Leitungsverbinder 1 für Medienleitungen, der in der dargestellten Ausführung als Muffenteil ausgeführt ist, aus einem Verbinderstück 2, welches zur Anschlussverbindung mit einer Medienleitung 3 (nur in Fig. 2, 16e und 16f gezeigt) oder mit einem Aggregat mindestens einen Anschlussabschnitt 4, 8 - im dargestellten Fall zwei Anschlussabschnitte 4, 8 - und mindestens einen an den Anschlussabschnitt 4, 8 angrenzenden Übergangsabschnitt 10 - im dargestellten Fall zwei Übergangsabschnitte 6, 10 - mit einem durchgehenden Strömungskanal 12 für das Medium aufweist. Unter dem Begriff "Übergangsabschnitt" 10 ist dabei ein Bereich des Leitungsverbinders 1 bzw. des Verbinderstückes 2 zu verstehen, der nach Anschluss von Leitungen 3 und/oder an ein Aggregat noch "freiliegt".

Im dargestellten Fall handelt es sich um zwei Übergangsabschnitte 6, 10 mit unterschiedlichem Durchmesser, welche sich daraus ergeben, dass der Anschlussabschnitt 8 des Leitungsverbinders 1 auf seiner in der Zeichnung links dargestellten Seite zur Aufnahme eines nicht dargestellten, insbesondere genormten, Steckerteils bestimmt ist, wozu im Inneren des mit dem Bezugszeichen 10 bezeichneten Übergangsabschnittes mit dem größeren Außendurchmesser, der auch einem größeren Innendurchmesser entspricht, Umfangsdichtungen angeordnet sind.

Der jeweilige Anschlussabschnitt 4, 8 kann auch als Anschlussdorn zum direkten Aufstecken einer Medienleitung 3 oder als in eine Steckmuffe einsteckbarer Steckerschaft ausgebildet sein. In den in Fig. 1, 2, 9 und 11 dargestellten Ausführungsformen der Erfindung bildet der Anschlussabschnitt 4 durch eine insbesondere hohlzylindrische Form eine Aufnahme zum direkten Einstecken der Medienleitung 3. Dabei wird die Medienleitung 3 vorzugsweise stoffschlüssig in dem Anschlussabschnitt 4 befestigt, beispielsweise verklebt oder verschweißt. Es handelt sich also bei dem Anschlussabschnitt 4 speziell um einen Schweißabschnitt. Für ein Verschweißen mittels Laserstrahl kann der Anschlussabschnitt 4 zumindest bereichsweise aus einem lasertransparenten Material bestehen.

In einer den Strömungskanal 12 zumindest teilweise umschließenden Anordnung sind elektrische Heizmittel 13 vorgesehen, die jedoch nur in Fig. 2, 8, 12e und 12f, 13e und 13f sowie 16e und 16f dargestellt sind. Als Heizmittel 13 ist mindestens ein Heizdraht vorgesehen, der bevorzugt in einer etwa gleichmäßigen Flächenverteilung zumindest über einen Bereich des Verbinderstückes 2 geführt ist. Die Heizmittel 13 können in den Anschlussabschnitten 4, 8 und/oder - wie dargestellt - in den angrenzenden Übergangsabschnitten 6,10 angeordnet sein.

Dadurch ist der erfindungsgemäße Leitungsverbinder 1 insbesondere für Leitungen in Kraftfahrzeugen zur Führung von gefriergefährdeten Medien, wie Wasser oder insbesondere wässrigen Harnstofflösungen, geeignet.

Zur Führung und/oder Fixierung der Heizmittel 13 ist am Verbinderstück 2 ein Fixierteil 14 mit Elementen 16, 18 angeordnet. Als Elemente 16, 18 können nach außen vorstehende Ansätze 16 bzw. Rippen und/oder - beispielsweise rillenförmige - Vertiefungen 18 vorgesehen sein. Das Fixierteil 14 kann bevorzugt ein Kunststoff-Formteil, beispielsweise ein in einem Zwei-Komponenten-Verfahren hergestelltes Spritzgussteil sein.

Dabei besteht wahlweise auch die Möglichkeit, bestimmte zusätzliche Funktionsabschnitte in das Fixierteil 14 oder in die Baueinheit aus Fixierterteil 14 und Verbinderstück 2 zu integrieren. Ein solcher Funktionsabschnitt kann vorzugsweise ein insbesondere im Bereich des Anschlussabschnittes 4 und/oder der Rohrleitung 3 angeordneter, sich in Richtung auf die Rohrleitung 3 hin konusförmig verjüngender Dichtabschnitt sein, auf den z. B. ein die Medienleitung 3 umhüllendes Wellrohr aufgesteckt werden kann.

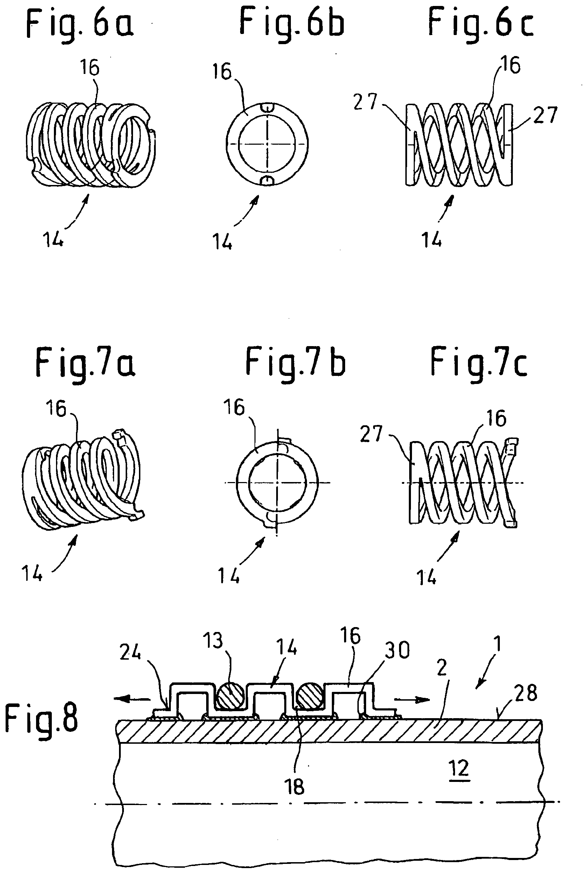

Der Heizdraht 13 ist um das Verbinderstück 2 außen spulenartig gewickelt, wobei er beispielsweise, wie in Fig. 8 gezeigt, in den rillenartigen Vertiefungen 18 schraubenlinienförmig verläuft.

Wie insbesondere die Darstellung in Fig. 2 veranschaulicht, ist das Fixierteil 14 gemäß der ersten Ausführung der Erfindung derart ausgeführt, dass ein nachfolgend auf das Fixierteil aufgebrachter Heizdraht 13 die beiden Übergangsabschnitte 6, 10 erwärmen kann.

Ein solcher, außen auf das Fixierteil 14 aufgebrachter Heizdraht 13 kann dabei mit einer beispielsweise aus einem Pulverlack oder dergleichen bestehenden, isolierenden Beschichtung überdeckt sein. Es kann sich auch um eine Tauchbeschichtung handeln. Durch die isolierende Beschichtung kann der Heizdraht 13 selbst ohne eigene Isolation ausgeführt sein.

Wie aus Fig. 1 und 2 des Weiteren hervorgeht, kann das Fixierteil 14 in seiner Grundgestalt insbesondere ring- oder rohrförmig ausgebildet sein. Die Elemente 16, 18 des Fixierteils 14 zur Führung und Fixierung des Heizmittels 13 können dabei bevorzugt wendelförmig oder auch achsparallel zum Strömungskanal 12 auf dem Außenumfang des Fixierteils 14 verlaufen.

Hierbei ist in der ersten Ausführung der Erfindung vorgesehen, dass das Fixierteil 14 einen Längsschlitz 20, aufweist. Das Fixierteil 14 weist somit eine C-förmige, das Verbinderstück 2 bzw. den Strömungskanal 12 ebenfalls zumindest teilweise umschließende Ausbildung auf, die bevorzugt derjenigen der elektrischen Heizmittel 13 entsprechen kann. Allerdings können die Heizmittel 13 im Montagezustand auch über den Schlitz 20 hinweg geführt werden. Das Fixierteil 14 kann mit Vorteil in dieser Ausführung - beispielsweise vor oder nach dem Verschweißen der Medienleitung 3 mit dem korrespondierenden Anschlussabschnitt 4 - auf das Verbinderstück 2 aufgeclipst werden. Ohne das Fixierteil 14 kann der Leitungsverbinder 1 für die unbeheizten Anwendungen genutzt werden.

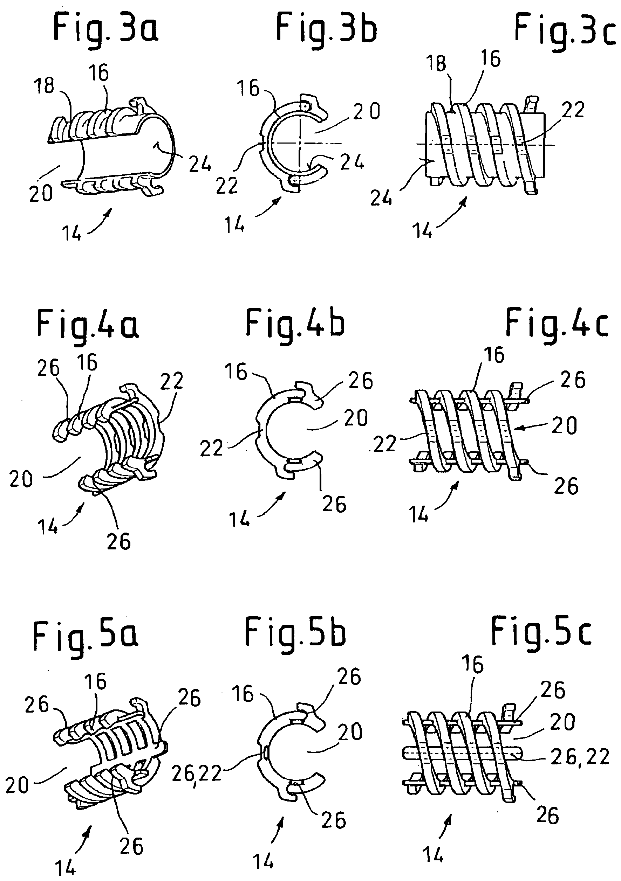

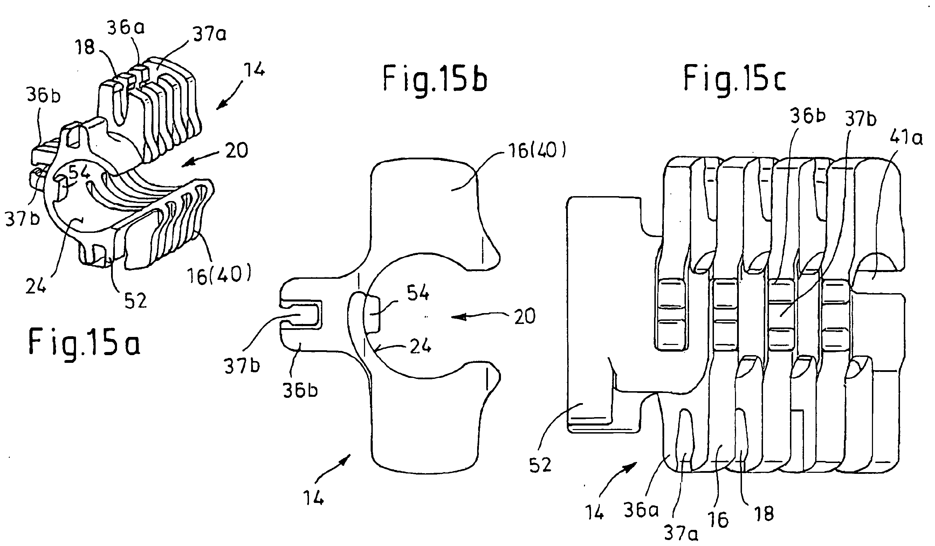

Ähnliche Ausführungen des Fixierteils 14 wie in Fig. 1 und 2 zeigen - jeweils in verschiedenen Ansichten - auch Fig. 3a, 3b, 3c bis Fig. 5a, 5b, 5c sowie 12a und folgende Figuren bis Fig. 15a, 15b, 15c.

Insbesondere zeigen Fig. 3a, 3b, 3c eine Ausbildung des Fixierteils 14 als dünnwandige mit einem längs verlaufenden Schlitz 20 versehene Feder zum nachträglichen Aufclipsen, Aufschnappen oder Aufrasten auf das Verbinderstück 2. In Fig. 3b ist insbesondere die im Querschnitt C-förmige Gestalt des Fixierteils 14 zu erkennen, wobei auf der dem Schlitz 20 diametral gegenüberliegenden Seite zur Erleichterung des Aufbiegens eine Schwächungsstelle 22 außenseitig in der vollflächig ausgebildeten Wand 24 vorgesehen ist.

In der Ausbildung gemäß Fig. 4a, 4b, 4c ist das Fixierteil 14 ebenfalls als geschlitzte Feder zum nachträglichen Aufclipsen ausgebildet. Das Fixierteil weist dabei im Endbereich der C-förmigen rippenartigen Elemente 16 zwei, insbesondere in Fig. 4c gut erkennbare Längsrippen 26 und keine geschlossene Wand auf, so dass es im Ganzen käfigartig ausgebildet ist, wobei die rippenartigen Elemente 16 zur Führung und Fixierung des Heizmittels 13 nach der Art einer Doppelhelix ausgebildet sind. Die offenen und/oder geschlossenen Schlitze des Wendelclips ermöglichen eine direkte Wärmeübertragung des Heizdrahtes auf das Verbinderstück 2.

Eine ähnliche Ausbildung zeigt auch das Fixierteil 14 gemäß Fig. 5a, 5b, 5c. Hier sind allerdings drei Längsrippen 26 vorgesehen, wobei die mittlere Längsrippe 26, wie insbesondere Fig. 5b veranschaulicht, gleichzeitig die vorstehende erwähnte Schwächungsstelle 22 ausbildet.

Für die Ausführungen des Fixierteils 14, welche - wiederum jeweils in verschiedenen Ansichten - in Fig. 6a, 6b, 6c und Fig. 7a, 7b, 7c dargestellt sind, ist vorgesehen, dass das Fixierteil 14, insbesondere vor einem Verschweißen der Medienleitung 3 mit dem erfindungsgemäßen Leitungsverbinder 1, auf das Verbinderstück 2 aufgeschoben wird. Zum Verschweißen kann das Fixierteil 14 dann aus dem Schweißbereich heraus- und anschließend zurückgeschoben werden. Es besitzt in diesen Ausführungen eine Ausbildung nach der Art eines insbesondere käfigartigen Manschettenteils für das Verbinderstück 2, wobei in der Ausführung gemäß Fig. 6a, 6b, 6c das Fixierteil 14 beidendig durch zwei umfangsgemäß geschlossene Abschlusswülste 27 begrenzt ist, in denen die Elemente 16 enden, während in der Ausführung gemäß Fig. 7a, 7b, 7c das Fixierteil 14 nur einendig eine umfangsgemäß geschlossene Abschlusswulst 27 und anderendig frei ragende Enden der Elemente 16 aufweist.

Bei der in Fig. 8 im Längsschnitt gezeigten weiteren Ausführung eines erfindungsgemäßen Leitungsverbinders 1 ist das Fixierteil 14 als Spiralwellrohr ausgebildet. Als Elemente 16, 18 des Fixierteils 14 zur Führung und Fixierung des Heizmittels 13 dienen dabei die Wellenberge im Sinne von nach außen vorstehenden Ansätzen 16 und die Wellentäler der Rohrwandung 24 im Sinne von rillenartigen und umfangsgemäß spiralförmig verlaufenden Vertiefungen 18. Je nachdem, ob in dem Fixierteil 14 ein Schlitz 20 vorgesehen wird oder nicht, kann das Spiralwellrohr dabei als auf das Verbinderstück 2 aufclipsbar gemäß der Erfindung oder als auf das Verbinderstück 2 manschetten- oder hülsenartig aufschiebbar gestaltet sein, wobei letzteres nicht zur Erfindung gehört.

Um den Wärmeübergang zwischen der Wandung 24 des Fixierteils 14 und der Wandung 28 des Verbinderstückes 2 zu intensivieren, kann zwischen das Fixierteil 14 und das Verbinderstück 2 eine an sich bekannte Wärmeleitpaste eingebracht werden, die in Fig. 8 mit dem Bezugszeichen 30 bezeichnet ist.

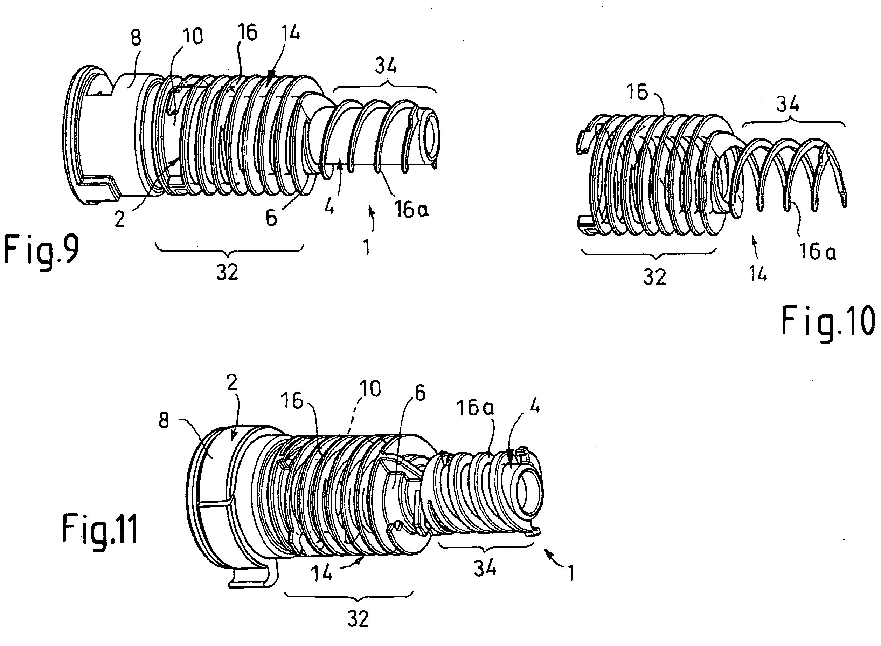

Sowohl bei der Ausführung des erfindungsgemäßen Leitungsverbinders 1, auf den sich Fig. 9 und 10 beziehen, wobei letztere das Fixierteil 14 allein zeigt, als auch bei der Ausführung des erfindungsgemäßen Leitungsverbinders 1, auf die sich Fig. 11 bezieht, ist vorgesehen, dass das Fixierteil 14 ohne Schlitz 20 ausgebildet ist und zur Montage auf das Verbinderstück 2 manschetten- oder hülsenartig aufgeschoben wird. Eine Besonderheit gegenüber den Ausführungen in Fig. 6a, 6b, 6c und Fig. 7a, 7b, 7c besteht jedoch hierbei darin, dass das Fixierteil 14 im Montagezustand nicht nur die Übergangsabschnitte 6, 10 überdeckt, sondern auch den Anschlussabschnitt 4. Die rippenartigen Elemente 16 zur Führung und Fixierung des Heizmittels 13 verlaufen im Fixierteil 14 wiederum nach der Art einer Doppelhelix und weisen frei ragende Enden auf.

Ein erster, an die größeren Durchmesser der Übergangsabschnitte 6, 10 angepasster Fixierabschnitt 32 des Fixierteils 14 geht dabei nahtlos in einen zweiten, an den kleineren Durchmesser des Anschlussabschnitts 4 angepassten Fixierabschnitt 34 für das Heizmittel 13 über. Dadurch gibt es keinen Bereich des Leitungsverbinders 1, in dem das Medium nicht erwärmt werden könnte. Auch in der Baueinheit aus dem erfindungsgemäßen Rohrverbinder 1 und der Medienleitung 3 ist es vorteilhafterweise möglich, eine durchgehende, lückenlose Beheizung über die gesamte Länge zu realisieren, indem sich das Fixierteil 14 für das bzw. mit dem Heizmittel 13 bedarfsweise auch bis über die Rohrleitung 3 oder zumindest einen Teil derselben hinweg erstrecken kann.

Zum Verschweißen kann das Fixierteil 14 im Schweißbereich in beiden Fixierabschnitten 32, 34 wie eine Schraubenfeder zusammengedrückt werden. Während die Federwirkung des Fixierteils 14 in den Ausführungen gemäß Fig. 3a, 3b, 3c bis Fig. 5a, 5b, 5c überwiegend in radialer Richtung im Sinne einer Rückstellung nach einer Umfangsaufweitung funktionell wirksam ist, wird sie gemäß Fig. 9 bis 11 aber auch erfindungsgemäß bei den Ausführungen 6a, 6b, 6c und Fig. 7a, 7b, 7c - überwiegend in axialer Richtung funktionell wirksam. Nach dem Verschweißen federt das komprimierte Fixierteil 14 zurück und überdeckt den Anschlussabschnitt 4 wieder vollständig und umfasst diesen mit dem zweiten Fixierabschnitt 34.

Die Ausführung des erfindungsgemäßen Leitungsverbinders 1 gemäß Fig. 9 und 10 unterscheidet sich von derjenigen gemäß Fig. 11 dadurch, dass die Wendelung der Elemente 16, 16a in beiden Fixierabschnitten 32, 34 im ersten Fall jeweils etwa den gleichen Anstieg hat, während sie im zweiten Fall unterschiedlich ist. Bei der Ausführung gemäß Fig. 11 weist die Wendelung der Elemente 16a im zweiten Fixierabschnitt 34 einen größeren Anstieg auf als die Wendelung der Elemente 16a im ersten Fixierabschnitt 32. Dadurch ist das Fixierteil 14 im zweiten Fixierabschnitt 34 leichter komprimierbar als im ersten Fixierabschnitt 32.

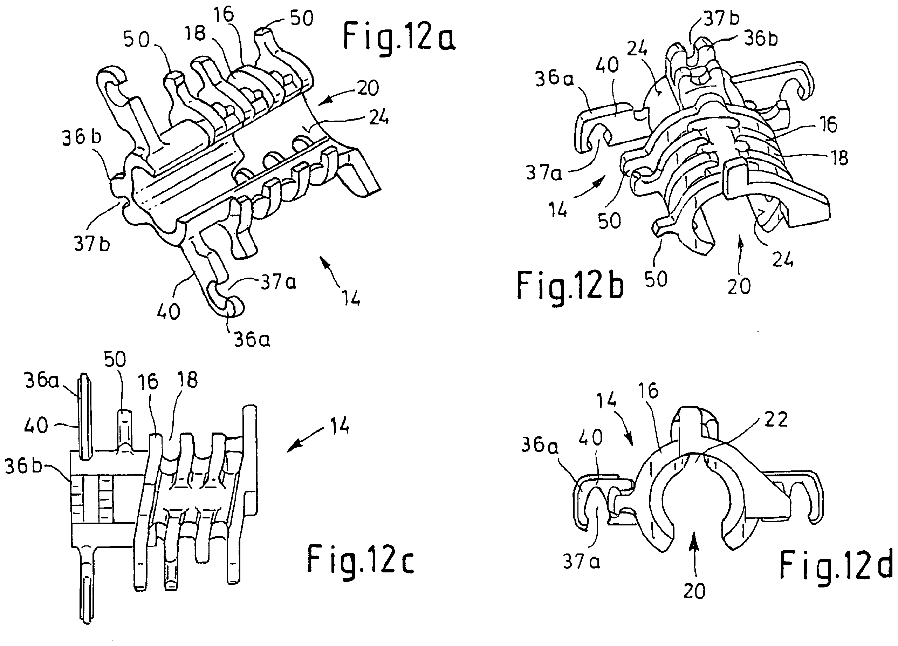

Die Ausführung des Fixierteils 14 gemäß Fig. 12a bis 12f ist ebenfalls eine mit einem Schlitz 20 versehene Feder zum nachträglichen Aufclipsen.

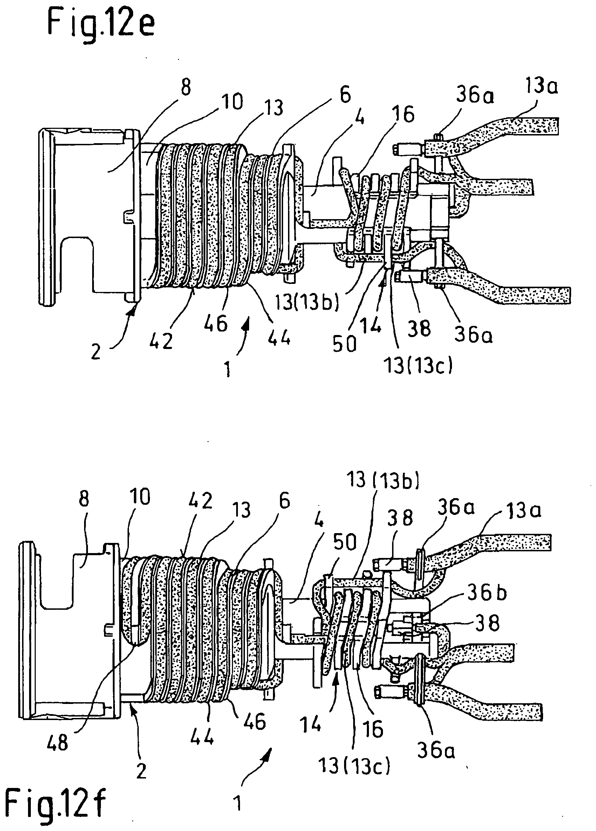

Für dieses Fixierteil 14 ist dabei charakteristisch, dass es Halterungen 36a, 36b für Crimpverbindungen 38 aufweist. Derartige Crimpverbindungen 38 können beispielsweise zwischen den elektrischen Heizmitteln 13, die unmittelbar am Verbinderstück 2 verlaufen, und Anschluss- bzw. Zuleitungsdrähten 13a oder unter verschiedenen Leitungsabschnitten der Heizmittel 13 vorgesehen sein, wie dies die Darstellungen in Fig. 12e und 12f zeigen.

Bei dieser Fixierteilausführung sind auf dem Außenumfang der Wand 24 drei Halterungen 36a, 36b für derartige Crimpverbindungen 38 vorgesehen. Zwei Halterungen 36a befinden sich an jeweils einem Halteärmchen 40 beidseitig neben dem Schlitz 20, und eine Halterung 36b befindet sich diametral gegenüber dem Schlitz 20. Die Halterungen 36a, 36b, die Öffnungen 37a, 37b aufweisen, in die die gecrimpten Leitungen 13, 13a eingeclipst werden können, gestatten es, die Crimpverbindungen 38 in geeigneter Weise axial und radial zu positionieren.

Des Weiteren zeigen die Darstellungen in Fig. 12e und 12f, dass bei dieser Ausführung des erfindungsgemäßen Leitungsverbinders 1 das Fixierteil 14 ausschließlich im Bereich eines Anschlussabschnittes 4 für die Medienleitung 3 angeordnet ist. Zwar sind auch im Bereich der Übergangsabschnitte 6, 10 die Heizmittel 13 in einer den Strömungskanal 12 umschließenden Anordnung vorgesehen, jedoch nicht fixiert durch das Fixierteil 14, sondern als eine doppelwendelförmige Bewicklung 42, wobei in den Übergangsabschnitten 6, 10 ebenfalls Elemente 44, 46, 48 zur Führung und/oder Fixierung der Heizmittel 13, wie Rippen 44 und Vertiefungen 46, angeordnet sind. Hierzu können auch - wie insbesondere Fig. 12f zeigt - Nasen 48 zur Umlenkung der Heizmittel 13 gehören.

Schließlich veranschaulichen die Darstellungen in Fig. 12e und 12f, dass die Heizmittel 13, mit Vorteil sowohl am gesamten Verbinderstück 2, als auch insbesondere am Fixierteil 14, in mindestens zwei Ebenen, vorzugsweise in drei Ebenen, mit jeweils unterschiedlichem Abstand zum Strömungskanal 12 geführt werden können. Zwischen den Ebenen können Abstände, beispielsweise von mindestens 0,5 mm, eingehalten werden, die verhindern, dass durch die Hitzeentwicklung der Heizmittel 13 das Material des Leitungsverbinders 1 und/oder der Leitung 3 zerstört wird. Die Anordnung der Heizmittel 13 in verschiedenen Ebenen gestattet es vorteilhafterweise auch, Leitungslängen, die als Montagelängen für ein Crimpen notwendig sind und die vorzugsweise 20 mm bis 25 mm betragen, in geeigneter, insbesondere platzsparender Weise am Verbinderstück 2 unterzubringen.

So ist den zeichnerischen Darstellungen zu entnehmen, dass bei dieser Ausführung am Fixierteil 14 eine erste, vom Strömungskanal 12 am weitesten entfernte Ebene vorgesehen ist, in der sich die Crimpverbindungen 38 sowie die Anschluss- bzw. Zuleitungsdrähte 13a befinden. Der Abstand dieser Ebene vom Strömungskanal 12 wird durch die Länge der Halteärmchen 40 mit den Halterungen 36a bestimmt. Unterhalb der ersten Ebene gibt es eine zweite Ebene, in der das Heizmittel (an dieser Stelle mit dem Bezugszeichen 13b bezeichnet) in im Wesentlichen axialer Richtung über das Fixierteil 14 hinweg in die Bewicklung 42 der Übergangsabschnitte 6, 10 geführt ist. Hierzu befinden sich ebenfalls spezielle, als Ansätze 50 ausgebildete Führungs- und Fixierelemente am Fixierteil 14. In einer dritten, dem Strömungskanal 12 am nächsten liegenden Ebene unterhalb der zweiten Ebene ist das Heizmittel (an dieser Stelle mit dem Bezugszeichen 13c bezeichnet) umfangsgemäß schraubenförmig gewickelt und verläuft in den Vertiefungen 18 des Fixierteils 14 zwischen den Rippen 16.

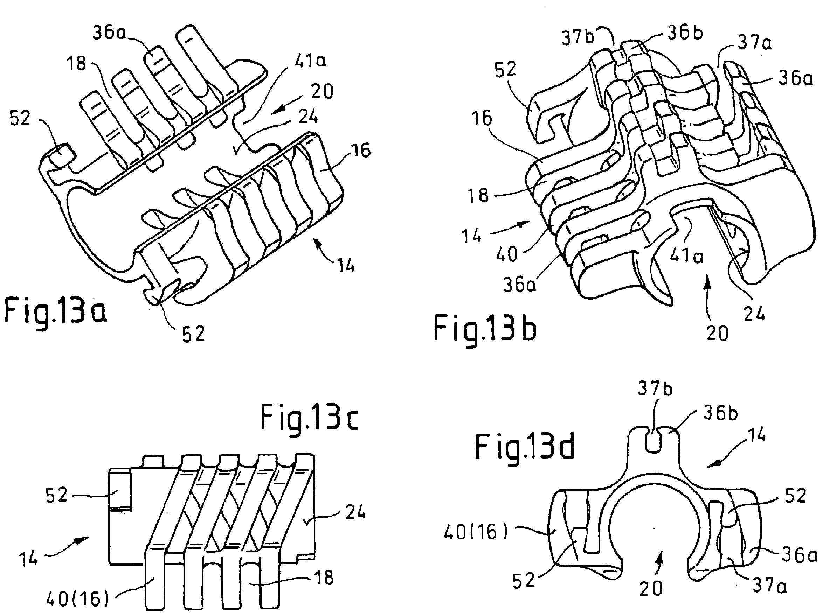

In der Ausführung gemäß Fig. 13a bis 13f ist das Fixierteil ebenfalls eine geschlitzte Feder zum nachträglichen Aufclipsen auf das Verbinderstück 2 im Bereich des Anschlussabschnitts 4 und weist Halterungen 36a, 36b für Crimpverbindungen 38 auf. Eine Halterung 36a, 36b ist dabei jeweils durch mehrere, voneinander beabstandete parallel zueinander verlaufende Halteärmchen 40 gebildet, deren Aufnahmeöffnungen 37a, 37b tiefer sind als in der vorstehend beschriebenen Ausführung. Auf diese Weise können in einer Halterung 36a, 36b gleichzeitig neben der Crimpverbindung 38 zwei zueinander und zum Strömungskanal parallel verlaufende Leitungsstücke der Heizmittel 13 aufgenommen werden. Dadurch entfällt eine der drei für das vorstehende Ausführungsbeispiel beschriebenen Ebenen der Leitungsführungen.

Die Halteärmchen 40 bilden dabei gleichzeitig die Rippen 16 aus, welche als Führungs- und Fixierelemente für einen Abschnitt des Heizmittels (an dieser Stelle wiederum mit dem Bezugszeichen 13c bezeichnet) dienen, in dem das Heizmittel 13c umfangsgemäß um das Fixierteil 14 verläuft. Die Vertiefungen 18 des Fixierteils 14 zwischen den Rippen 16 sind dabei durch die Abstände zwischen den Halteärmchen 40 gebildet. Die beiden Halterungen 36a, die sich beidseitig neben dem Schlitz 20 befinden, weisen Öffnungen 37a auf, die im Gegensatz zur Ausführung in Fig. 12a bis 12f in tangential unterschiedliche Richtungen weisen. Ein stirnseitiges Halteärmchen 40 weist keine Öffnung 37a auf. So können die Crimpverbindungen 38 in montagetechnisch vorteilhafter Weise dort mit Anschlag positioniert werden.

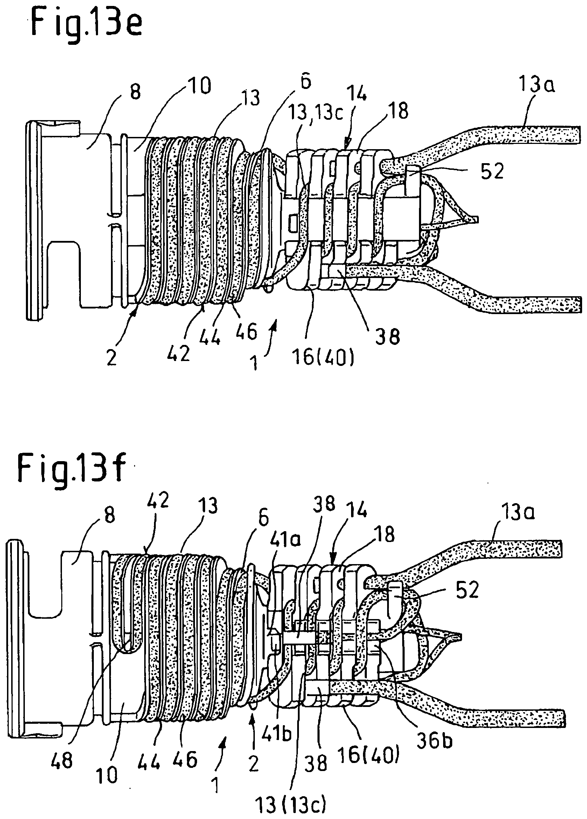

Der axialen und radialen Positionierung des gesamten Fixierteils 14 auf dem Verbinderstück 2 dienen stattdessen einendig offene Ausnehmungen 41a des Fixierteils 14, die zu diesem Zweck im Montagezustand - wie Fig. 13f zeigt - formangepasst mit korrespondierenden Vorsprüngen 41b des Verbinderstücks 2 zusammenwirken können.

Das Fixierteil 14 weist in dieser Ausführung beidseitig des Schlitzes Ansätze 52 auf, die ähnlich aussehen und angeordnet sind wie die Crimpverbindungshalterungen 36a in der vorstehend beschriebenen Ausführung. Die Ansätze 52 sind jedoch kürzer als die Halteärmchen 40 und dienen nur zur Umlenkung der Heizmittel, wie dies Fig. 13e und 13f zu entnehmen ist.

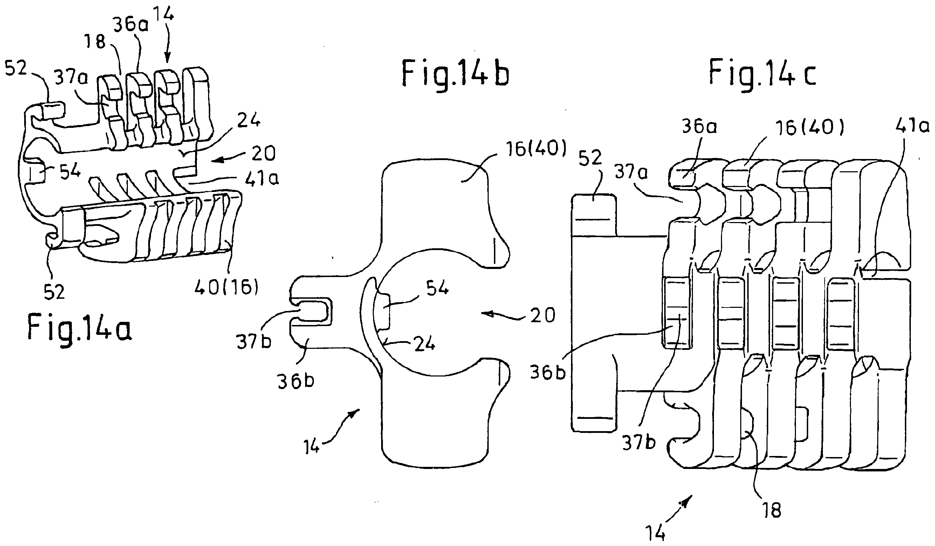

Die Ausführung in Fig. 14a bis 14c stimmt in ihrem Aufbau im Wesentlichen mit der Ausführung in Fig. 13a bis 13f überein. Als Spezifikum ist hier jedoch an der Innenseite der Wand 24 des Fixierteils 14 endseitig ein nach innen ragender Ansatz 54 ausgebildet, der zur Zentrierung der Medienleitung 3 dient, indem er dem im Vergleich mit dem Anschlussabschnitt 4 kleineren Durchmesser der Medienleitung Rechnung trägt. Das Fixierteil 14 kann so mit Vorteil derart positioniert werden, dass es teilweise den Anschlussabschnitt 4 und teilweise die Medienleitung 3 überdeckt. Auch kann dieser Ansatz 54 - ähnlich wie die vorstehend beschriebenen Ausnehmungen 41a - zur axialen Positionierung auf dem Verbinderstück 2 wirken, indem er bei der Montage einen Endanschlag bildet. Außerdem kann er sichernd gegen eine Verdrehung gegenüber dem Verbinderstück 2 wirken.

Auch die Ausführung in Fig. 15a bis 15c stimmt in ihrem Aufbau im Wesentlichen mit der Ausführung in Fig. 13a bis 13f und in Fig. 14a bis 14c überein. Der Unterschied besteht dabei darin, dass die Öffnungen 37a der beiden Halterungen 36a, die sich beidseitig neben dem Schlitz 20 befinden, nicht in tangentiale, sondern in radial entgegengesetzt nach außen gerichtete Richtung weisen.

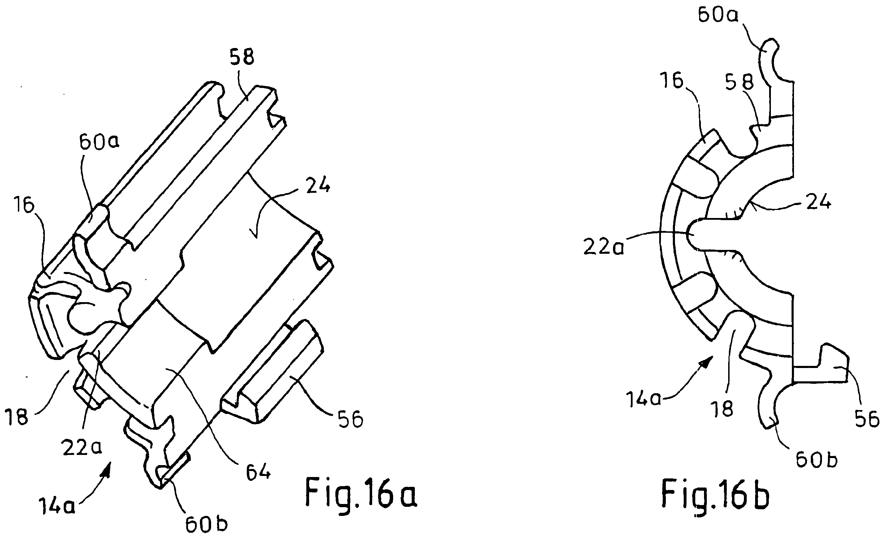

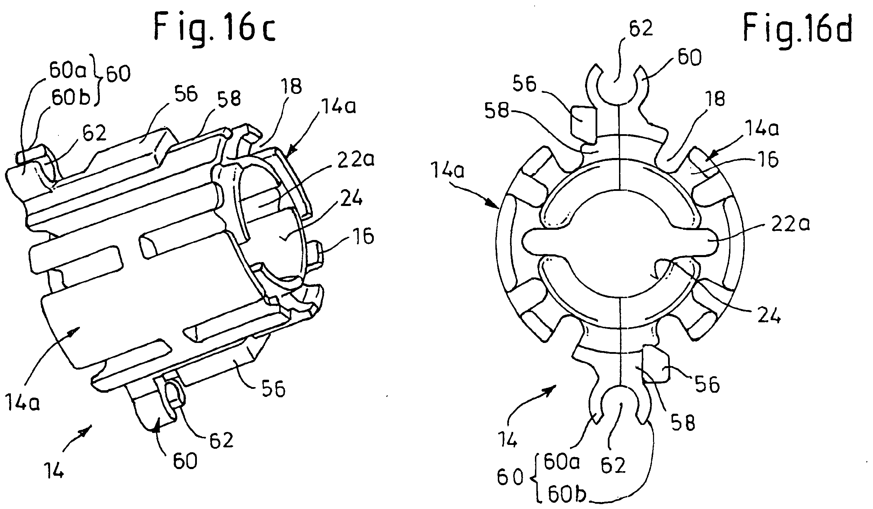

So zeigen Fig. 16c und 16d ein Fixierteil 14, das aus zwei identisch aufgebauten Klammerhälften 14a bzw. Halbschalen zusammengesetzt ist, von denen eine als Einzelteil jeweils in Fig. 16a und 16b dargestellt ist. Der Montagezustand in diesem Leitungsverbinder 1 ist in Fig. 16e und 16f gezeigt. Jede Klammerhälfte 14a weist Rippen 16 und Vertiefungen 18 auf, welche im Montagezustand jeweils achsparallel zum Strömungskanal 12 verlaufen. Die Klammerhälften 14a weisen darüber hinaus am Innenumfang der Wand 24 eine Längsnut 22a auf, die eine Kabelführung unter der Wandung ermöglicht. Ein Stück der elektrischen Heizmittel 13, das solchermaßen geführt ist, ist in Fig. 16e und 16f mit dem Bezugszeichen 13d gekennzeichnet. Eine Verbindung der beiden Klammerhälften 14a aneinander erfolgt durch Rastlaschen 56, die an der jeweils anderen Klammerhälfte 14a eine komplementäre Rastkante 58 hintergreifen. An einem Ende des Fixierteils 14 sind wiederum zwei vom Außenumfang der Wand 24 abragende, diametral zueinander angeordnete Halterungen 60 angeordnet, die in ihren radial nach außen weisenden Öffnungen 62 Crimpverbindungen 38 aufnehmen können, wie dies Fig. 16e und 16f zeigen. Die Halterungen 60 werden bei der Montage aus entsprechenden Halbelementen 60a, 60b an jeder Fixierteilhälfte 14a gebildet. Auch diese Fixierteilausführung kann so positioniert werden, dass es teilweise den Anschlussabschnitt 4 und teilweise die Medienleitung 3 überdeckt, was Fig. 16e und 16f veranschaulichen. Zur Zentrierung der Medienleitung 3 ist hier an einem Ende - wie insbesondere Fig. 16a zeigt - ein innenseitiger durchmesserreduzierter Bereich 64 der Wand 24 vorgesehen.

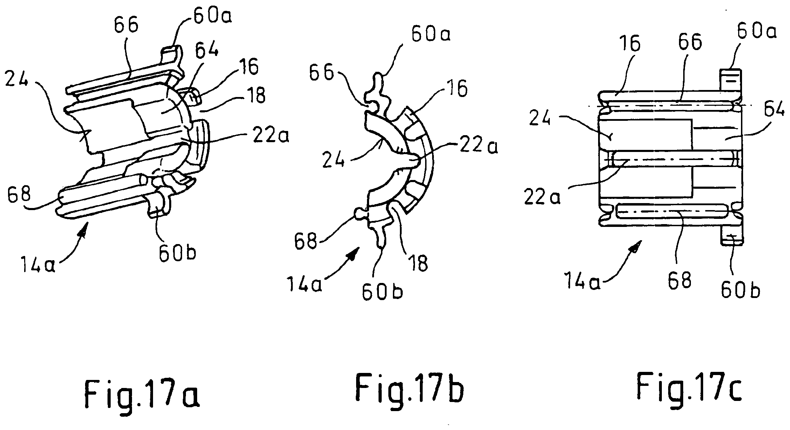

Die Ausführung in Fig. 17a bis 17c stimmt in ihrem Aufbau im Wesentlichen mit der Ausführung in Fig. 16a bis 16f überein. Die Zeichnungsfiguren zeigen wiederum die Klammerhälfte 14a, welche eine Nut 22a zur Kabelführung unter der Wand 24 und einen durchmesserreduzierten Bereich 64 der Wand 24 zur Zentrierung der Medienleitung 3 aufweisen. Bei dieser Ausführung erfolgt jedoch die Fixierung der Klammerhälften 14a aneinander nicht mittels Rastlaschen 56, sondern jeweils mittels einer Nut 66 mit etwa kegelförmigem Querschnitt und einer komplementär ausgebildeten Feder 68, die bei der Montage miteinander verrasten.

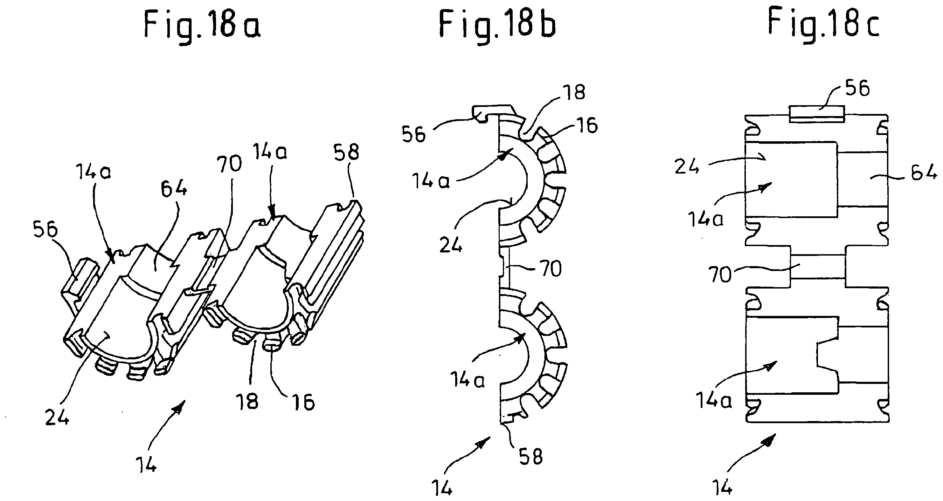

Auch die Ausführung gemäß Fig. 18a bis 18c stimmt vom Grundaufbau her im Wesentlichen mit der Ausführung in Fig. 16a bis 16f überein. Allerdings sind hier die beiden Klammerhälften 14a mit Vorteil unverlierbar über ein Filmscharnier 70 verbunden. Die anderseitige Fixierung erfolgt wiederum durch eine Rastlasche 56, die im Montagezustand eine Rastkante 58 hintergreift. Diese Ausführung weist keine Halterungen 60 für Crimpverbindungen 38 und keine innere Längsnut 22a zur Kabelführung auf.

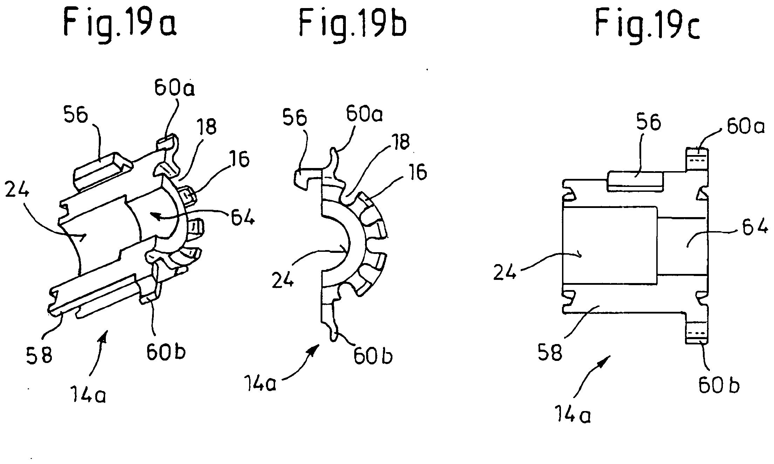

Die Ausführung des Fixierteils 14 gemäß Fig. 19a bis 19c stellt eine vereinfachte Ausführung zu der in Fig. 16a bis 16f gezeigten dar, insofern hier keine innere Längsnut 22a zur Kabelführung unter der Wand 24 vorgehen ist. Alle anderen Merkmale stimmen überein.

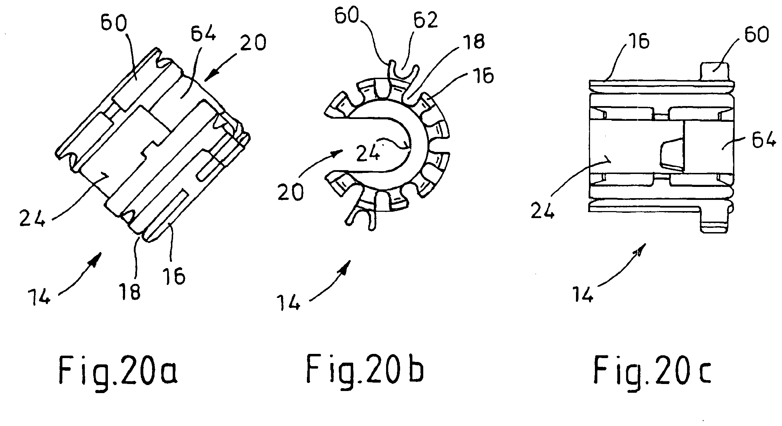

Die Ausführung des Fixierteils 14 gemäß Fig. 20a bis 20c ist eine mit Schlitz 20 versehene, im Querschnitt im Wesentlichen ausgebildete Klammer, wie diese für die Fixierteile 14 mit vorwiegend umfangsgemäßer Bewickelung vorstehend ausführlich beschrieben wurde, weist jedoch Rippen 16 und Vertiefungen 18 auf, welche im Montagezustand jeweils achsparallel zum Strömungskanal 12 verlaufen. Das Fixierteil 14 dient zum nachträglichen Aufclipsen auf das Verbinderstück 2 im Bereich des Anschlussabschnitts 4 und der Medienleitung 3 und weist zwei Halterungen 60 für Crimpverbindungen 38 sowie einen durchmesserreduzierten Bereich 64 der Wand 24 zur Zentrierung der Medienleitung 3 auf.

Wie bereits aus den vorstehenden Ausführungen hervorgeht, ist die Erfindung nicht auf die zeichnerisch dargestellten und beschriebenen Ausführungsbeispiele beschränkt, sondern umfasst auch alle im Sinne der Erfindung gleichwirkenden Ausführungen, so weit diese unter den beanspruchten gegenstand fallen. So könnten beispielsweise das Verbinderstück 2 und das Fixierteil 14 derart konzipiert sein, dass sie unlösbar, beispielsweise durch ein Verkleben oder ein Verschweißen, miteinander verbunden bzw. verbindbar sind. Das Fixierteil 14 könnte als Elemente 16, 18 zur Führung und Fixierung des Heizmittels 13 auch stiftartig nach außen vorstehende Ansätze 16 aufweisen.

Um eine hohe Wärmeleitfähigkeit zu erreichen, kann bei einem aus Kunststoff bestehenden Verbinderstück 2 und/oder Fixierteil 14 das Kunststoffmaterial bestimmte Füllstoffe zur Erhöhung der Wärmeleitfähigkeit aufweisen. Als solche Füllstoffe sind Partikel aus Aluminium, Al₂0₃, Glas- und/oder Kohlefasern geeignet.

Die Heizmittel 13 können mit einer Leistung von 3 bis 20 Watt und der Heizdraht mit einer Länge von beispielsweise bis zu 200 mm ausgebildet sein. Für ein Verbinderstück 2 mit einem Innenvolumen des Strömungskanals 11 im Bereich von 0,1 bis 1,0 cm³ ist ein Leistungsquotient im Bereich von 1 bis 15 Watt / cm³ zweckmäßig. Der Heizdraht kann mit negativem Temperaturkoeffizienten (NTC) oder mit positivem Temperaturkoeffizienten (PTC) ausgebildet sein. Eine Versorgungsspannung in der Größenordnung von 10 bis maximal 32 Volt ist zweckmäßig. Es ist auch möglich, dass als Heizmittel 13 das Material des Fixierteiles 14 selbst elektrisch leitfähig, beispielsweise als Stromschiene, ausgebildet ist.

Die Anschlussabschnitte 4, 8 können, wie bereits erwähnt, auf die unterschiedlichste Art und Weise ausgebildet sein. So kann, wie in Fig. 1, 2, 9, 11, 12e, 12f, 13e, 13f, 16e und 16f am Beispiel des mit dem Bezugszeichen 8 bezeichneten Anschlussabschnitts dargestellt ist, dieser z. B. - wie erwähnt - als Steckmuffe zur Aufnahme eines Steckerschaftes ausgebildet sein. Hierbei können im Falle einer Steckverbindung beliebige Mittel zum insbesondere lösbaren Arretieren der Steckverbindungsteile vorgesehen sein.

Des Weiteren kann der Fachmann, ohne dass der Rahmen der Erfindung verlassen wird, ergänzend weitere zweckmäßige technische Maßnahmen vorsehen. So kann beispielsweise, wenn mindestens einer der Anschlussabschnitte 4, 8 als hohlzylindrische Aufnahme zum direkten Einstecken des Endes der Medienleitung 3 ausgebildet ist und die Medienleitung 3 durch Verschweißen darin befestigbar ist, ein Problem darin bestehen, dass nach dem Schweißen die Erkennung von lasergeschweißten und nicht lasergeschweißten Bauteilen optisch nicht möglich ist. Auch bei einer Dichtheits- und Druckprüfung ist dies normalerweise so. Hier kann durch geeignete Wahl einer Lackschicht, Materialfarbe, Batch usw. vorgesehen sein, dass der Schweißbereich durch den Laserstrahl optisch, z. B. im Hinblick auf Farbe, Glanz und/oder Oberflächenstruktur, derart verändert wird, dass ein eindeutiger Nachweis, ob geschweißt wurde oder nicht, vorliegt.

Im Zusammenhang mit der Darstellung des erfindungsgemäßen Leitungsverbinders 1 gemäß Fig. 11 war bereits ausgeführt worden, dass die Wendelung der Elemente 16, 16a in den beiden Fixierabschnitten 32, 34 einen unterschiedlichen Anstieg haben kann. Ebenso kann bedarfsweise auch vorgesehen sein, dass sich diese Wendelung stetig oder sprunghaft innerhalb eines Abschnitts ändert.

Insbesondere zwecks Isolation können ein mit dem Fixierteil 14 versehener Anschlussabschnitt 6, 8 und/oder Übergangsabschnitt 10 nachträglich zusätzlich vergossen werden. Das Fixierteil 14 kann - wie erwähnt - auch zur Zentrierung und Fixierung an der Medienleitung 3 und/oder an einem Stecker eingesetzt werden.

## Patentansprüche

1. Leitungsverbinder (1) für Medienleitungen (3), bestehend aus einem Verbinderstück (2) mit einem Strömungskanal (12) und mit mindestens einem Anschlussabschnitt (4, 8) zur Anschlussverbindung mit einer Medienleitung (3) oder mit einem Aggregat und mit mindestens einem an den Anschlussabschnitt (4, 8) angrenzenden Übergangsabschnitt (6, 10), wobei Heizmittel (13, 13b, 13c, 13d) in einer den Strömungskanal (12) zumindest teilweise umschließenden Anordnung vorgesehen sind, und wobei am Verbinderstück (2) Elemente (16, 16a, 18) zur Führung und/oder Fixierung der Heizmittel (13, 13b, 13c, 13d) angeordnet sind, wobei die Heizmittel (13, 13b, 13c, 13d) elektrische Heizmittel (13, 13b, 13c, 13d) sind, wobei als Heizmittel (13, 13b, 13c, 13d) mindestens ein Heizdraht in einer mit einer etwa gleichmäßigen Flächenverteilung verlaufenden Anordnung vorgesehen ist, und wobei die Heizmittel (13) das Verbinderstück (2) außen spulenartig gewickelt umschließen,
**dadurch gekennzeichnet, dass** die Elemente (16, 16a, 18) zur Führung und/oder Fixierung der Heizmittel (13, 13b, 13c, 13d) auf einem Fixierteil angeordnet sind, welches aus einem federelastischen Material besteht und entweder auf das Verbinderstück (2) manschettenartig aufschiebbar ist, wobei es in axialer Richtung komprimierbar ist, oder auf das Verbinderstück (2) aufgeclipst ist, wobei es in radialer Richtung zum Aufclipsen aufweitbar ist und dazu einen Längsschlitz (20) aufweist, so dass das Fixierteil somit eine C-förmige, das Verbinderstück 2 beziehungsweise den Strömungskanal 12 ebenfalls zumindest teilweise umschließende Ausbildung aufweist, und über den Längsschlitz (20) hinweg der Heizdraht im Montagezustand geführt ist.

2. Leitungsverbinder (1) nach Anspruch 1,
**dadurch gekennzeichnet, dass** die Heizmittel (13, 13b, 13c, 13d) über den Bereich des/der Übergangsabschnitte(s) (6, 10) und/oder des/der Anschlussabschnitt(e) (4, 8) verlaufen, wobei das Fixierteil (14) insbesondere im Bereich des/der Anschlussabschnitt(e) (4, 8) und der Medienleitung (3) angeordnet ist.

3. Leitungsverbinder (1) nach Anspruch 1 oder 2,
**dadurch gekennzeichnet, dass** das Fixierteil (14) Mittel zur Zentrierung der Medienleitung (3), wie einen Ansatz (54) oder einen durchmesserreduzierten Bereich der Wand (24), aufweist.

4. Leitungsverbinder (1) nach einem der Ansprüche 1 bis 3,
**dadurch gekennzeichnet, dass** das Fixierteil (14) am Innenumfang seiner Wand (24) eine Längsnut (22a) zur Führung eines Abschnitts (13d) der Heizmittel (13, 13b, 13c, 13d) aufweist.

5. Leitungsverbinder (1) nach einem der Ansprüche 1 bis 4,
**dadurch gekennzeichnet, dass** das Fixierteil (14) als Elemente (16, 16a, 18, 50, 52) zur Führung und Fixierung der Heizmittel (13, 13b, 13c, 13d) nach außen vorstehende Ansätze (16a, 50, 52) bzw. Rippen (16) und/oder - beispielsweise rillenförmige - Vertiefungen (18) aufweist.

6. Leitungsverbinder (1) nach einem der Ansprüche 1 bis 5,
**dadurch gekennzeichnet, dass** mindestens einer der Anschlussabschnitte (4, 8) als hohlzylindrische Aufnahme zum direkten Einstecken des Endes der Medienleitung (3) ausgebildet ist, wobei die Medienleitung (3) vorzugsweise stoffschlüssig, insbesondere durch Verkleben oder Verschweißen, befestigbar ist.

7. Leitungsverbinder (1) nach einem der Ansprüche 1 bis 6,
**dadurch gekennzeichnet, dass** mindestens ein Anschlussabschnitt (4) derart zumindest bereichsweise aus einem für Laserstrahlen transparenten Material besteht, dass die Medienleitung (3) durch Laserstrahl-Schweißen befestigbar ist oder dass mindestens ein Anschlussabschnitt (4) aus einem Material besteht oder mit einem Material verbunden ist, welches durch Laserstrahlung seine insbesondere optischen Eigenschaften, wie Farbe, Glanz und/oder Oberflächenstruktur, verändert.

8. Leitungsverbinder (1) nach einem der Ansprüche 1 bis 7,
**dadurch gekennzeichnet, dass** das Fixierteil (14) in der Grundgestalt ring- oder rohrförmig ausgebildet ist.

9. Leitungsverbinder (1) nach einem der Ansprüche 1 bis 8,
**dadurch gekennzeichnet, dass** die Elemente(16, 18)des Fixierteils (14) zur Führung und Fixierung des Heizmittels (13) wendelförmig auf dem Außenumfang des Fixierteils (14) verlaufen.

10. Leitungsverbinder (1) nach einem der Ansprüche 1 bis 9,
**dadurch gekennzeichnet, dass** das Fixierteil (14) als Spiralwellrohr ausgebildet ist, wobei insbesondere zwischen das Fixierteil (14) und das Verbinderstück (2) eine Wärmeleitpaste (30) eingebracht ist.

11. Leitungsverbinder (1) nach einem der Ansprüche 1 bis 10,
**dadurch gekennzeichnet, dass** in dem Fixierteil (14) mindestens ein erster an den Durchmesser des Übergangsabschnittes (6, 10) und/oder eines Anschlussabschnitts (4, 8) angepasster Fixierabschnitt (32) für die Heizmittel (13, 13b, 13c, 13d) nahtlos in einen zweiten, an einen Durchmesser eines weiteren Übergangsabschnittes (6, 10) und/oder Anschlussabschnitts (4, 8) angepassten Fixierabschnitt (34) für die Heizmittel (13, 13b, 13c, 13d) übergeht.

12. Leitungsverbinder (1) nach Anspruch 11,
**dadurch gekennzeichnet, dass** ein Anstieg einer Wendelung von Elementen (16) im ersten Fixierabschnitt (32) sich vom Anstieg einer Wendelung von Elementen (16a) im zweiten Fixierabschnitt (34) unterscheidet, insbesondere dass der Anstieg im ersten Fixierabschnitt (32) kleiner ist als im zweiten Fixierabschnitt (34).

13. Leitungsverbinder (1) nach einem der Ansprüche 1 bis 12,
**dadurch gekennzeichnet, dass** das Fixierteil (14) ein Kunststoff-Formteil, beispielsweise ein in einem Zwei-Komponenten-Verfahren hergestelltes Spritzgussteil ist.

14. Leitungsverbinder (1) nach einem der Ansprüche 1 bis 13,
**dadurch gekennzeichnet, dass** das Fixierteil (14) Halterungen (36a, 36b) für Crimpverbindungen (38) zwischen (den) elektrischen Heizmitteln (13, 13b, 13c, 13d) untereinander sowie zwischen (den) elektrischen Heizmitteln (13, 13b, 13c, 13d) und Anschluss- bzw. Zuleitungsdrähten (13a) aufweist.

15. Leitungsverbinder (1) nach einem der Ansprüche 1 bis 14,
**dadurch gekennzeichnet, dass** die Heizmittel (13, 13b, 13c), am Verbinderstück (2), insbesondere am Fixierteil (14), in mindestens zwei Ebenen, vorzugsweise in drei Ebenen, mit jeweils unterschiedlichem Abstand zum Strömungskanal (12) geführt sind.

## Claims

1. Line connector (1) for media lines (3), consisting of a connector piece (2) with a flow channel (12) and with at least one joining portion (4, 8) for joining connection to a media line (3) or to a unit and with at least one transition portion (6, 10) adjoining the joining portion (4, 8), wherein heating means (13, 13b, 13c, 13d) are provided in an arrangement at least partially surrounding the flow channel (12), and wherein at the connector piece (2) there are arranged elements (16, 16a, 18) for guiding and/or fixing the heating means (13, 13b, 13c, 13d), wherein the heating means (13, 13b, 13c, 13d) are electrical heating means (13, 13b, 13c, 13d), wherein as heating means (13, 13b, 13c, 13d) there is provided at least one heating wire in an arrangement running with an approximately uniform surface distribution, and wherein the heating means (13) surround the connector piece (2) in a manner wound externally in a coil-like manner, **characterized in that** the elements (16, 16a, 18) for guiding and/or fixing the heating means (13, 13b, 13c, 13d) are arranged on a fixing part, which is made of a resilient material and either can be pushed onto the connector piece (2) in a sleeve-like manner, said part being compressible in an axial direction, or is clipped onto the connector piece (2), said part being enlargeable in a radial direction for clipping on and having a longitudinal slit (20) for this purpose, such that the fixing part thus has a C-shaped embodiment which likewise at least partially surrounds the connector piece (2) and the flow channel (12), and the heating wire is guided through the longitudinal slit (20) in the assembled state.

2. Line connector (1) according to Claim 1, **characterized in that** the heating means (13, 13b, 13c, 13d) run over the region of the transition portion(s) (6, 10) and/or of the joining portion(s) (4, 8), wherein the fixing part (14) is in particular arranged in the region of the joining portion(s) (4, 8) and of the media line (3).

3. Line connector (1) according to Claim 1 or 2, **characterized in that** the fixing part (14) has means for centring the media line (3), such as a projection (54) or a diameter-reduced region of the wall (24).

4. Line connector (1) according to any one of Claims 1 to 3, **characterized in that**, at the inner circumference of its wall (24), the fixing part (14) has a longitudinal groove (22a) for guiding a portion (13d) of the heating means (13, 13b, 13c, 13d) .

5. Line connector (1) according to any one of Claims 1 to 4, **characterized in that**, as elements (16, 16a, 18, 50, 52) for guiding and fixing the heating means (13, 13b, 13c, 13d), the fixing part (14) has outwardly projecting projections (16a, 50, 52) and/or ribs (16) and/or - for example groove-shaped - depressions (18).

6. Line connector (1) according to any one of Claims 1 to 5, **characterized in that** at least one of the joining portions (4, 8) is in the form of a hollow-cylindrical receiver for direct insertion of the end of the media line (3), wherein the media line (3) is preferably securable in a materially bonded manner, in particular by adhesive bonding or welding.

7. Line connector (1) according to any one of Claims 1 to 6, **characterized in that** at least one joining portion (4) is made at least regionally of a material transparent for laser beams in such a manner that the media line (3) is securable by laser-beam welding, or **in that** at least one joining portion (4) is made of a material or is connected to a material which, by way of laser radiation, changes its, in particular optical, properties, such as colour, lustre and/or surface structure.

8. Line connector (1) according to any one of Claims 1 to 7, **characterized in that** the fixing part (14) is ring-shaped or pipe-shaped in basic design.

9. Line connector (1) according to any one of Claims 1 to 8, **characterized in that** the elements (16, 18) of the fixing part (14) for guiding and fixing the heating means (13) run helically on the outer circumference of the fixing part (14).

10. Line connector (1) according to any one of Claims 1 to 9, **characterized in that** the fixing part (14) is in the form of a helically-corrugated pipe, wherein in particular a heat-conducting paste (30) is introduced between the fixing part (14) and the connector piece (2).

11. Line connector (1) according to any one of Claims 1 to 10, **characterized in that**, in the fixing part (14), at least a first fixing portion (32), adapted to the diameter of the transition portion (6, 10) and/or of a joining portion (4, 8), for the heating means (13, 13b, 13c, 13d) transitions seamlessly into a second fixing portion (34), adapted to a diameter of another transition portion (6, 10) and/or joining portion (4, 8), for the heating means (13, 13b, 13c, 13d).

12. Line connector (1) according to Claim 11, **characterized in that** a pitch of a coiling of elements (16) in the first fixing portion (32) differs from the pitch of a coiling of elements (16a) in the second fixing portion (34), in particular **in that** the pitch in the first fixing portion (32) is smaller than in the second fixing portion (34).

13. Line connector (1) according to any one of Claims 1 to 12, **characterized in that** the fixing part (14) is a plastics shaped part, for example an injection-moulded part produced in a two-component process.

14. Line connector (1) according to any one of Claims 1 to 13, **characterized in that** the fixing part (14) has holders (36a, 36b) for crimp connections (38) between (the) electrical heating means (13, 13b, 13c, 13d) among each other as well as between (the) electrical heating means (13, 13b, 13c, 13d) and connecting or lead-in wires (13a).

15. Line connector (1) according to any one of Claims 1 to 14, **characterized in that** the heating means (13, 13b, 13c) are guided on the connector piece (2), in particular on the fixing part (14), in at least two planes, preferably in three planes, each plane being at a different distance from the flow channel (12).

## Revendications

1. Raccord de conduite (1) pour conduites de fluides (3), constitué d'une partie de raccord (2) comprenant un canal d'écoulement (12) et au moins une section de raccordement (4, 8) servant au raccordement à une conduite de fluides (3) ou comprenant un groupe et au moins une section de transition (6, 10) adjacente à la section de raccordement (4, 8), des moyens de chauffage (13, 13b, 13c, 13d) se trouvant dans un arrangement qui entoure au moins en partie le canal d'écoulement (12), et des éléments (16, 16a, 18) servant à guider et/ou à caler les moyens de chauffage (13, 13b, 13c, 13d) étant disposés sur la partie de raccord (2), les moyens de chauffage (13, 13b, 13c, 13d) étant des moyens de chauffage (13, 13b, 13c, 13d) électriques, au moins un fil chauffant étant présent en tant que moyens de chauffage (13, 13b, 13c, 13d) dans un arrangement qui suit un tracé avec une distribution en surface approximativement régulière, et les moyens de chauffage (13) entourant la partie de raccord (2) en étant enroulés à l'extérieur à la manière d'une bobine,
**caractérisé en ce que** les éléments (16, 16a, 18) servant à guider et/ou à caler les moyens de chauffage (13, 13b, 13c, 13d) sont disposés sur une pièce de calage qui est constituée d'un matériau élastique et qui soit peut être enfilée sur la partie de raccord (2) à la manière d'un manchon, celle-ci pouvant être comprimée dans une direction axiale, soit est fixée par des clips sur la partie de raccord (2), celle-ci étant extensible dans une direction radiale en vue de la fixation par des clips et possède à cet effet une fente longitudinale (20), de sorte que la pièce de calage présente ainsi une configuration en forme de C qui entoure également au moins en partie la partie de raccord (2) ou le canal d'écoulement (12), et le fil chauffant dans l'état monté est guidé au-delà de la fente longitudinale (20).

2. Raccord de conduite (1) selon la revendication 1, **caractérisé en ce que** les moyens de chauffage (13, 13b, 13c, 13d) suivent un tracé au-dessus de la zone de la ou des sections de transition (6, 10) et/ou de la ou des sections de raccordement (4, 8), la pièce de calage (14) étant notamment disposée dans la zone de la ou des sections de raccordement (4, 8) et de la conduite de fluides (3).

3. Raccord de conduite (1) selon la revendication 1 ou 2,
**caractérisé en ce que** la pièce de calage (14) possède des moyens servant au centrage de la conduite de fluides (3), tels qu'un appendice (54) ou une zone de la paroi (24) ayant un diamètre réduit.

4. Raccord de conduite (1) selon l'une des revendications 1 à 3,
**caractérisé en ce que** la pièce de calage (14) possède, sur la périphérie intérieure de sa paroi (24), une rainure longitudinale (22a) servant au guidage d'une section (13d) des moyens de chauffage (13, 13b, 13c, 13d).

5. Raccord de conduite (1) selon l'une des revendications 1 à 4,
**caractérisé en ce que** la pièce de calage (14) possède en tant qu'éléments (16, 16a, 18, 50, 52) servant au guidage et au calage des moyens de chauffage (13, 13b, 13c, 13d) des appendices (16a, 50, 52) faisant saillie vers l'extérieur ou des nervures (16) et/ou des creux (18), par exemple en forme de cannelure.

6. Raccord de conduite (1) selon l'une des revendications 1 à 5,
**caractérisé en ce qu'**au moins l'une des sections de raccordement (4, 8) est réalisée sous la forme d'un logement cylindrique creux servant à insérer directement l'extrémité de la conduite de fluides (3), la conduite de fluides (3) pouvant être fixée, de préférence par liaison de matières, en particulier par collage ou par soudage.

7. Raccord de conduite (1) selon l'une des revendications 1 à 6,
**caractérisé en ce qu'**au moins une section de raccordement (4) est constituée au moins par endroits d'un matériau transparent aux rayons laser, de sorte que la conduite de fluides (3) peut être fixée par un procédé de soudage au laser, ou **en ce qu'**au moins une section de raccordement (4) est constituée d'un matériau ou est reliée à un matériau, lequel modifie par un rayonnement laser ses propriétés, en particulier optiques, telles que sa couleur, sa brillance et/ou sa texture en surface.

8. Raccord de conduite (1) selon l'une des revendications 1 à 7,
**caractérisé en ce que** la pièce de calage (14) est réalisée dans sa configuration de base de manière à présenter une forme annulaire ou une forme tubulaire.

9. Raccord de conduite (1) selon l'une des revendications 1 à 8,
**caractérisé en ce que** les éléments (16, 18) de la pièce de calage (14) servant à guider et à caler l'élément de chauffage (13) suivent un tracé de forme hélicoïdale sur la périphérie extérieure de la pièce de calage (14).

10. Raccord de conduite (1) selon l'une des revendications 1 à 9,
**caractérisé en ce que** la pièce de calage (14) est réalisée sous la forme d'un tube ondulé en spirales, une pâte conductrice de chaleur (30) étant incorporée notamment entre la pièce de calage (14) et la partie de raccord (2) .

11. Raccord de conduite (1) selon l'une des revendications 1 à 10,
**caractérisé en ce que** dans la pièce de calage (14), au moins une première section de calage (32) pour les moyens de chauffage (13, 13b, 13c, 13d), adaptée au diamètre de la section de transition (6, 10) et/ou d'une section de raccordement (4, 8), se transforme sans soudure en une deuxième section de calage (34) pour les moyens de chauffage (13, 13b, 13c, 13d), adaptée à un diamètre d'une autre section de transition (6, 10) et/ou section de raccordement (4, 8).

12. Raccord de conduite (1) selon la revendication 11,
**caractérisé en ce qu'**une rampe d'une hélice d'éléments (16) dans la première section de calage (32) est différente de la rampe d'une hélice d'éléments (16a) dans la deuxième section de calage (34), en particulier **en ce que** la rampe de la première section de calage (32) est plus petite que celle dans la deuxième section de calage (34) .

13. Raccord de conduite (1) selon l'une des revendications 1 à 12,
**caractérisé en ce que** la pièce de calage (14) est une pièce moulée en plastique, par exemple une pièce moulée par injection fabriquée selon un procédé à deux composantes.

14. Raccord de conduite (1) selon l'une des revendications 1 à 13,
**caractérisé en ce que** la pièce de calage (14) possède des éléments de maintien (36a, 36b) pour des liaisons par sertissage (38) entre des (les) moyens de chauffage (13, 13b, 13c, 13d) électriques eux-mêmes ainsi qu'entre des (les) moyens de chauffage (13, 13b, 13c, 13d) électriques et des fils de raccordement ou d'alimentation (13a).

15. Raccord de conduite (1) selon l'une des revendications 1 à 14,
**caractérisé en ce que** les moyens de chauffage (13, 13b, 13c) sont guidés au niveau de la partie de raccord (2), en particulier au niveau de la pièce de calage (14), dans au moins deux plans, de préférence dans trois plans, respectivement à des distances différentes du canal d'écoulement (12).
